(19) Europäisches Patentamt / European Patent Office / Office européen des brevets

(11) **EP 4 109 192 B1**

(12) **EUROPEAN PATENT SPECIFICATION**

(45) Date of publication and mention
of the grant of the patent:
**31.01.2024 Bulletin 2024/05**

(21) Application number: **22179524.8**

(22) Date of filing: **17.06.2022**

(51) International Patent Classification (IPC):
*G05D 1/00* *(2024.01)*     *G05D 1/02* *(2020.01)*
*A47L 11/40* *(2006.01)*

(52) Cooperative Patent Classification (CPC):
**G05D 1/0044; A47L 11/4011; G05D 1/0022;
G05D 1/0221; G05D 1/0274;** A47L 2201/04;
G05D 2201/0203; Y02D 10/00

(54) **MAP DATA COMMUNICATION FOR CLEANING DEVICE**

KARTENDATENKOMMUNIKATION FÜR EINE REINIGUNGSVORRICHTUNG

COMMUNICATION DE DONNÉES CARTOGRAPHIQUES POUR DISPOSITIF DE NETTOYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2021 CN 202110711712**

(43) Date of publication of application:
**28.12.2022 Bulletin 2022/52**

(73) Proprietor: **Anker Innovations Technology Co.,
Ltd.
Changsha, Hunan 410000 (CN)**

(72) Inventor: **WU, Jinghua
Changsha (CN)**

(74) Representative: **Bittner, Thomas L.
Boehmert & Boehmert
Anwaltspartnerschaft mbB
Pettenkoferstrasse 22
80336 München (DE)**

(56) References cited:
**US-A1- 2016 307 328     US-A1- 2019 189 006
US-A1- 2019 368 882**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present application relates to the technical field of cleaning devices (e.g., robots), and in particular to methods of map data transmission, cleaning devices, systems, and storage media.

Background

A cleaning device (e.g., floor-cleaning robot, floor vacuum and/or mop device) can build a map in advance through its own sensors, and the cleaning device will keep updating the map as the location of the cleaning device changes during cleaning process, resulting in real-time changes in map data during the cleaning process. In order to facilitate users to understand the cleaning progress, the cleaning device needs to transmit the real-time changing map data to the user terminal during the cleaning process, and the user terminal renders and displays the changing map data for users to view.

However, the transmission of real-time changing map data requires a large amount of network bandwidth, and due to limited network bandwidth, each transmission of complete map data not only consumes a large amount of network bandwidth, but also the effectiveness of the transmission is poor, which cannot meet user needs.

Document US 2016/ 307 328 A1 discloses embodiments pertain to the use of user equipment (UE) for the generation of a 3D exterior envelope of a structure based on captured images and a measurement set associated with each captured image.

Document US 2019 / 368 882 A1 relates to an online system that builds a high definition (HD) map for a geographical region based on sensor data captured by a plurality of autonomous vehicles driving through a geographical region.

In Document US 2019 / 189 006 A1, a three-dimensional information processing method is disclosed.

Summary

In order to solve the above technical problems, the present application describes one or more methods of map data transmission, cleaning devices, systems, and storage media.

For example, the present application describes a method of map data transmission of a cleaning device. The method comprises: obtaining a first map data corresponding to a current cleaning position and a second map data corresponding to a previous cleaning position, the first and second map data are both pre-divided into at least two map layers; extracting first map layer data from the first map data for each map layer and extracting second map data from the second map data for each map layer; obtaining the first map layer data for which the second map layer data has changed relative to the same map layer (e.g., a difference between the first map layer data and the second map layer data); sending the changed first map layer data to a computing device (e.g., a cloud server).

At least two of said map layers may comprise two of the following: a parameter layer comprising map parameters of the cleaning map, a pixel layer comprising pixel data for each pixel point in said cleaning map, a trajectory layer comprising trajectory data for the cleaning trajectory, a pose layer comprising pose data for the cleaning pose, a partitioned room layer comprising partitioned room information for the cleaning partitioned room, a restricted area layer comprising restricted area information for the cleaning restricted area, or a virtual wall layer comprising virtual wall information for the virtual wall of the map in said cleaning map and one or more of said room identifiers of said cleaning partitioned rooms.

When the first map layer data for which the second map layer data relative to the map layer has changed is the first map layer data for the pixel layer; said obtaining the first map layer data for which the second map layer data relative to the map layer of the map layer has changed may comprise: obtaining a multi-dimensional first map layer data of the pixel layer from the first map data, obtaining a multi-dimensional second map layer data of a same pixel layer from the second map data; dimensionally transforming the multi-dimensional first map layer data to obtain an one-dimensional first map layer data, and dimensionally transforming the multi-dimensional second map layer data to obtain an one-dimensional second map layer data; partitioning the one-dimensional first map layer data into a plurality of data block-sized blocks of first map data, and partitioning the one-dimensional second map layer data into a plurality of data block-sized blocks of second map data; and obtaining a first map data block that has changed relative to the second map data block of the same data block size.

Sending to the cloud said first map layer data that has changed may comprise: obtaining a first encoding method used in the last sending of the first map layer data; obtaining a second encoding method different from the first encoding method; encoding the first map layer data using the second encoding method; and sending the first map layer data encoded by the second encoding method to the cloud.

The first map layer data may comprise: a map identification, a map layer identification, a data type, a data offset, and/or a data length.

The present application also describes a method of map data transmission applied to the cloud. The method comprises: receiving a first map layer data sent by a cleaning device, the first map layer data is changed relative to a second map layer data of a same map layer, the first map layer data is obtained by map layer extraction of the first map data corresponding to a current cleaning position of the cleaning device, the second map layer data is obtained by map layer extraction of the second map data corresponding to a previous cleaning position of the cleaning device, the first map data and the second map data are both pre-divided into at least two map layers; determining whether a third map data exists in the cloud and whether a third map layer data corresponding to the first map layer data exists in the third map data; when the third map data exists in the cloud and the third map layer data exists in the third map data corresponding to the first map layer data, updating the third map layer data in the third map data to the first map layer data.

In the third map data of the cloud, determining whether the third map data exists in the cloud and whether the third map data corresponding to the first map layer data exists in the third map data comprises: extracting map identification and map layer identification in the first map layer data; determining whether the third map data corresponding to the map identification exists in the cloud; when the third map data corresponding to the map layer identification exists in the cloud, determining whether a third map layer data corresponding to the map layer identification exists in the third map data; when the third map layer data corresponding to the map layer identification exists in the third map data, determining that the third map layer data exists in the cloud and the third map layer data corresponding to the first map layer data exists in the third map data.

The method further comprises: when the third map layer data corresponding to the first map layer data does not exist in the third map data, creating a third map layer data corresponding to the first map layer data; and updating the third map layer data in the third map data as the first map layer data.

The method further comprises: creating the third map data when the third map data does not exist in the cloud; creating a third map layer data corresponding to the first map layer data in the third map data; and updating the third map layer data in the third map data as the first map layer data.

Updating the third map layer data in the third map data to the first map layer data comprises: extracting the data type, data offset position, data length and data content in the first map layer data; when the data type is add/insert, adding/inserting data content of the data length to the data offset position of the third map layer data.

Updating the third map layer data in the third map data to the first map layer data when the third map data exists in the cloud and the third map data exists in the third map data corresponding to the first map layer data comprises: extracting the data type, data offset position, data length and data content in the first map layer data; deleting at least some of said third map layer data when said data type is deleted; shifting said data content at said data offset position by a distance of said data length when said data type is insertion, and inserting said data content of said data length at said data offset position in said third map layer data. Inserting data content of said data length at said data offset location in said third map layer data when said data type is increase.

If the first map layer data that has changed relative to the second map layer data of the same the map layer is the first map layer data of the pixel layer, updating the third map layer data of the third map data to said first map layer data comprises: obtaining a first decoding method for decoding the last received first map layer data; obtaining a second decoding method different from the first decoding method; decoding the first map layer data using the second decoding method to obtain the decoded first map layer data; dimensionally transforming of the decoded first map layer data to obtain first multi-dimensional map data; and updating the third map layer data using the first multi-dimensional map data.

The present application also provides a method of map data transmission applied to a user terminal, the method comprises: receiving first map layer data sent from the cloud, the first map layer data is sent by the cloud after updating the second map layer data to the first map layer data, the first map layer data is changed relative to the second map layer data of the same map layer, the first map layer data is obtained by map layer extraction of the first map data corresponding to the current cleaning position of the cleaning device, the second map layer data is obtained by map layer extraction of the second map data corresponding to the previous cleaning position of the cleaning device, the first and second map data are both pre-divided into at least two map layers; determining whether a fourth map data exists in the user terminal and whether there is a fourth map layer data corresponding to the first map layer data in the fourth map data; updating the fourth map layer data in the fourth map data to the first map layer data when the fourth map data exists in the user terminal and the fourth map data corresponds to the first map layer data; and rendering the updated fourth map data.

The present application also describes a cleaning device comprising one or more processors, communication interfaces, memory, and communication interfaces, wherein the processors, the communication interfaces, and the memory may communication with each other via one of the communication interfaces. The processors may be used for performing the map data transmission methods described herein.

The present application also provides a non-transitory computer readable storage medium storing instructions and/or programs used for performing the map data transmission methods described herein.

The above technical solutions provided by this application have at least the following advantages over the prior art.

Firstly, a cleaning device obtains the first map data corresponding to the current cleaning position and the second map data corresponding to the previous cleaning position by first obtaining the first map data and the second map data, wherein the first map data and said second map data are pre-divided into at least two map layers, and then extracting the first map layer data of each map layer in said first map data and the second map layer data of each said map layer in said second map data. Then the first map layer data which has changed relative to the second map layer data of the same map layer is obtained, and finally the first map layer data which has changed can be sent to the cloud.

Secondly, by sending to the cloud only the first map layer data that has changed relative to the second map layer data of the same map layer, the cleaning device transfers less data, reduces the bandwidth resources occupied by the transmission of map data, and avoids the transmission delay of map data.

Thirdly, the cleaning device enables stitching of map data by receiving the first map layer data sent by the cleaning device that changes relative to the second map layer data of the same map layer, using the first map layer data to update the third map layer data in the cloud, as well as enabling saving the complete map data in the cloud, which can make the transmission of map data less compared to transmitting all the map data, reducing the bandwidth resources occupied by the transmission of map data and avoid the delay of map data transmission.

Last but not least, the cleaning device, by receiving the first map layer data sent from the cloud that changes relative to the second map layer data of the same map layer, uses the first map layer data to update the fourth map layer data local to the user terminal, realizes the stitching of map data in the user terminal, and realizes the rendering of complete map data in the user terminal, which, relative to the transmission of all map data, can reduce the transmission volume (e.g., size of transmission packets/data), the bandwidth resources occupied by the transmission of map data, and the transmission delay of map data.

Description of embodiments

The accompanying drawings are used to provide further understanding of the embodiments of this application and form part of the specification and, together with the embodiments of this application, are used to explain this application and do not constitute a limitation of this application. In the accompanying drawings, same reference marks usually represent same parts or steps.

Fig. 1    is a flowchart of a method for map data transmission.
Fig. 2    is a schematic diagram of a first map data or a second map data.
Fig. 3    is a schematic diagram of a pixel layer.
Fig. 4    is a schematic diagram of a trajectory layer.
Fig. 5    is a schematic diagram of an attitude layer.
Fig. 6    is a schematic diagram of a partitioned room information.
Fig. 7    is a schematic diagram of an exclusion zone message.
Fig. 8    is a schematic diagram of a virtual wall message.
Fig. 9    is a schematic diagram of a partitioned room identification.
Fig. 10   is a schematic diagram of a segmentation of one-dimensional map data.
Fig. 11   is a flowchart of a method of map data transmission.

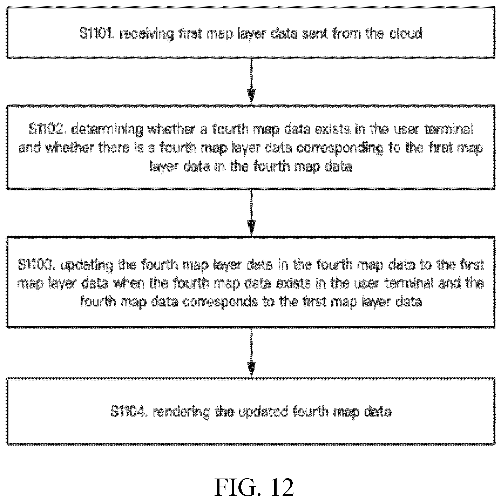

Fig. 12   is a flowchart of a method of map data transmission.
Fig. 13   is a schematic diagram of the relationship between a first map, a second map, a third map and a fourth map.
Fig. 14   is a structural diagram of a cleaning device.

In order to make the object, technical solutions and advantages of the present application more apparent, the following exemplary embodiments according to the present application will be described in detail with reference to the accompanying drawings. It is clear that the described embodiments are only a portion of the embodiments of the present application and not all of the embodiments of the present application, and it should be understood that the present application is not limited by the example embodiments described herein. Based on the embodiments of this application described in this application, all other embodiments obtained by a person skilled in the art without creative labor shall fall within the scope of protection of this application.

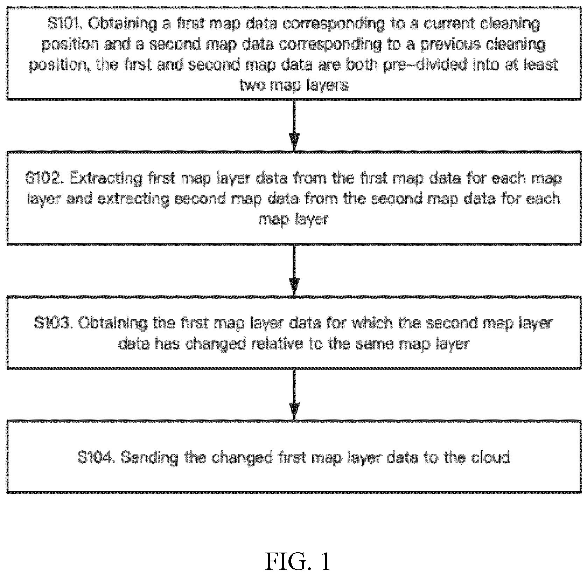

As shown in Fig. 1, a method of map data transmission that can be applied in a cleaning device (e.g., a robot) may comprise the following steps:

At Step S101, a cleaning device may obtain the first map data corresponding to the current cleaning position of the computing device and the second map data corresponding to the previous cleaning position.

The current cleaning position refers to the current cleaning moment where the cleaning device is located, the previous cleaning position refers to the previous cleaning moment where the cleaning device is located, and the time interval between the current cleaning moment and the previous cleaning moment can be set according to the actual application needs, such as 1 second, 3 seconds or 10 seconds, etc.

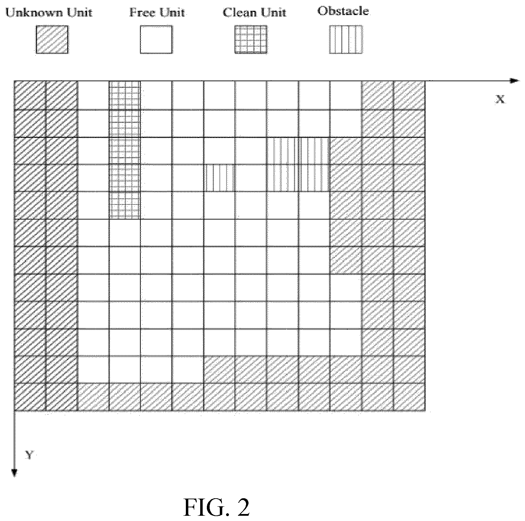

The first map data is the map data constructed by the cleaning device at the current cleaning position, and the second map data is the map data constructed by the cleaning device at the upward moving cleaning position, and each time the cleaning device can store the constructed map data into the storage record for subsequent use after constructing the map data, as shown in Fig. 2. The unknown unit in the first map data or the second map data indicates the unscanned area/location. The unknown unit in the first map data or the second map data indicates the area that has not been scanned, the free unit indicates the area that can be cleaned freely, the clean unit indicates the area that has been cleaned, and the obstacle indicates the area that cannot be cleaned.

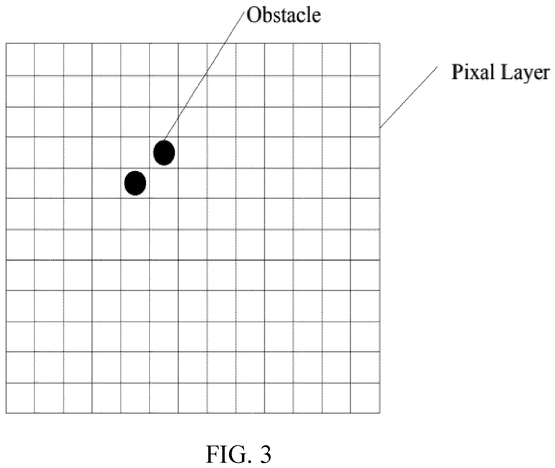

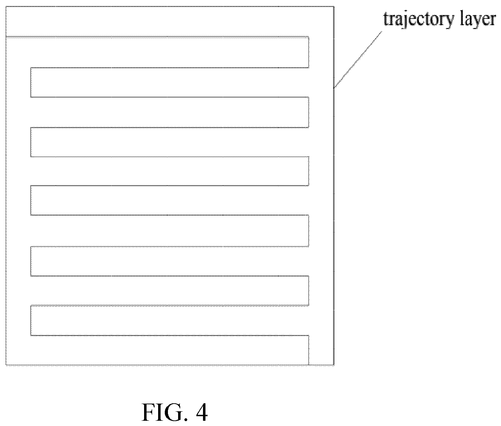

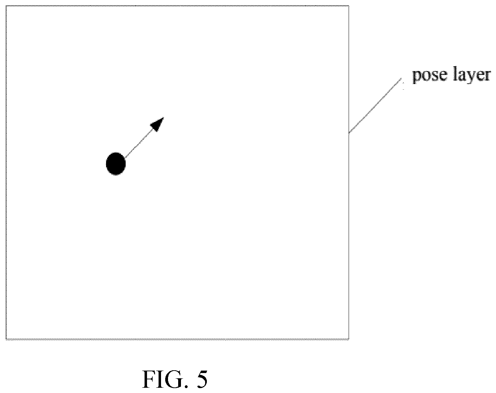

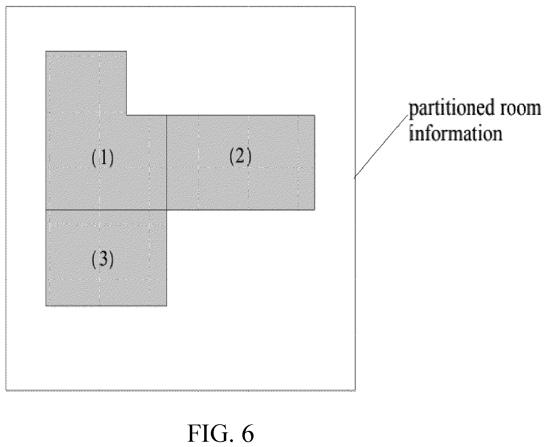

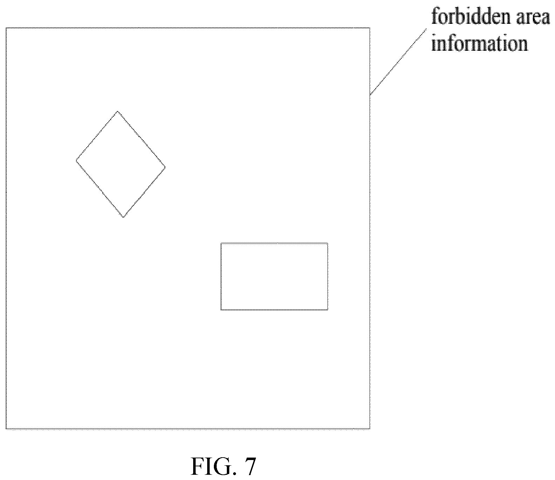

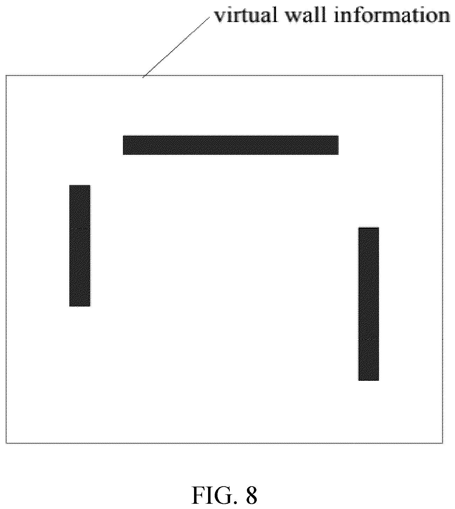

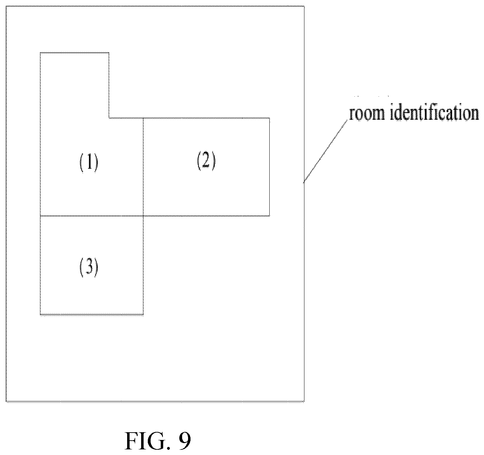

The first map data and the second map data may be divided into at least two map layers, the at least two map layers comprising: a parameter layer comprising

**EP 4 109 192 B1**

map parameters of the cleaning map, a pixel layer comprising pixel data of each pixel point in said cleaning map (pixel data as shown in Figure 3), a trajectory layer comprising trajectory data of the cleaning trajectory (e.g., cleaning trajectory as shown in Figure 4), a pose layer comprising pose data of the cleaning pose (e.g., pose data as shown in Fig. 5), one or more of partitioned room information for cleaning partitioned rooms (e.g., partitioned rooms as shown in Fig. 6), a forbidden area layer comprising forbidden area information for cleaning forbidden areas (e.g., forbidden areas as shown in Fig. 7), a virtual wall layer comprising virtual wall information for map virtual walls in said cleaning map (e.g., map virtual walls as shown in Fig. 8) and room identification for said cleaning partitioned rooms (e.g., room identification as shown in Fig. 9). For example, the individual map layers are identified by numbers: e.g., parameter layer: 0, pixel layer: 0 - 64, track layer: 100, partitioned room: 101, restricted area: 102, map virtual wall: 103, pose layer: 104, map room name: 105, etc.

The map layer data of each map layer may comprise data header and map layer data. The data header includes: map identifier, map layer identifier, data type, data offset and data length, etc. The map identifier is used to distinguish different map data, each map layer identifier is used to distinguish different map layer data, the data type is used to identify whether the current data is add type, delete type, or insert type, etc., for example. Delete type is used to indicate that some or all data of the current map layer is cleared, add type is used to indicate that the data is filled according to the offset position and the data length is the length of the data content, and insert type is used to indicate that the data at the offset position is moved according to the distance of the data offset and the current data is filled at the blank position after the data is moved. The data offset is the position where the data is stored and the cloud may select the storage position according to the data. The cloud may select the storage location based on the data offset.

The data headers for the first map layer data and the second map layer data accordingly include information such as: map identification, map layer identification, data type, data offset, and data length.

In this step, the first map data can be obtained directly after the cleaning device has constructed a map based on the current cleaning location, and the second map data corresponding to the previous cleaning location can be obtained within the stored record of the map data.

At Step S102, the cleaning device may extract, in the first map data, the first map layer data for each map layer and in the second map data the second map layer data for each map layer.

The cleaning device may extract the first map layer data corresponding to each map layer in the first map data and the second map layer data corresponding to each map layer in the second map data in this step because at least two map layers are divided in advance for the first map data and the second map data.

At Step S103, the cleaning device may obtain the first map layer data for which the second map layer data has changed relative to the second map layer of the same map layer.

In this step, for any map layer, the first map layer data of that map layer can be compared with the second map layer data, and if the first map layer data is different from the second map layer data, it can be determined that the first map layer data has changed relative to the second map layer data, and that first map layer data (e.g., data difference) is obtained.

If there exists a plurality of map layers whose first map layer data changes with respect to the second map layer data of the same map layer, the first map layer data of the plurality of map layers can be obtained.

At Step S104, the cleaning device may send the changed first map layer data to the cloud.

The data format of each map layer data can be defined according to the data characteristics of each map layer data. The data with few changes and small amount of data can be directly transmitted in full amount (e.g., all data transmission), such as: parameter layer and attitude layer, etc., the data of each change is not related to the data of the last change can be transmitted in incremental amount (e.g., only the change is transmitted), such as: trajectory layer. If the data is related to the last change, the data may be transmitted in full + differential (see below for an example of transmitting the data of the first map layer corresponding to the pixel layer), e.g., the pixel layer, etc.

Firstly, the computing device may obtain the first map data corresponding to the current cleaning position and the second map data corresponding to the previous cleaning position by first obtaining the first map data and the second map data, wherein the first map data and said second map data are pre-divided into at least two map layers, and then extracting the first map layer data of each map layer in said first map data and the second map layer data of each said map layer in said second map data. Then the first map layer data which has changed relative to the second map layer data of the same map layer is obtained, and finally the first map layer data which has changed can be sent to the cloud.

Secondly, by sending to the cloud only the first map layer data that has changed relative to the second map layer data of the same map layer, the cleaning device may transfer less data, reduce the bandwidth resources occupied by the transmission of map data, and avoid or reduce the transmission delay of map data.

In the field of sweeper devices, the device may build a map through its own sensors, and the device may keep updating the map as it cleans, with map pixel cells. The map pixel cells are divided into free areas, obstacle areas, unknown areas, and/or cleaned areas, etc. The existing map update method requires the whole map data to be packaged and transmitted, if the map update is too frequent, the whole map needs to be updated and transmitted frequently. The map data volume is large, which requires a larger network bandwidth of the device, and the transmission time will be extended correspondingly. To this end, the present application describes that when the first map layer data that changes relative to the second map layer data of the same map layer is the first map layer data of the pixel layer, the complete map data can be divided into fixed size partitions, divided into fixed size blocks, and the map is updated by transmitting only the blocks with data changes. As the map data of each piece becomes smaller, the differential comparison of the changed data is carried out for differential transmission, so that the map is transmitted in an incremental-like manner, and only the part of the updated map that has changed is transmitted, thus significantly reducing the size of the transmission of map data.

At step 103, the cleaning device may obtain first map layer data for which the second map layer data has changed relative to the second map layer of the same map layer comprises:

At Step 201, the cleaning device may obtain multi-dimensional first map layer data of the pixel layer in the first map data and multi-dimensional second map layer data of the same pixel layer in the second map data.

The map layer data of the pixel layer may comprise complete raster map data, and the map layer data may comprise two-dimensional map data with a map size of w*h, wherein w is the width of the map and h is the height of the map.

Since the first map layer data of each map layer has been extracted in the first map data and the second map layer data of each the map layer has been extracted in the second map data in step S102, the first map layer data and the second map layer data of the pixel layer can be obtained in this step, and both the first map layer data and the second map layer data may be multi-dimensional.

At Step 202, the cleaning device may transform the multi-dimensional first map layer data to obtain one-dimensional first map layer data and transform said multi-dimensional second map layer data to obtain one-dimensional second map layer data.

The map layer data can be divided into, for example, free areas, obstacle areas, unknown areas, and/or cleaned areas, etc., and each pixel unit can be located in a free area, an obstacle area, an unknown area, or a cleaned area.

Using $P(x, y) = s$ as the pixel cell in the multidimensional map layer data, w as the width of the map, h as the height of the map, x in the range $0 \leq x < w$, y in the range $0 \leq y < h$, and the size of all pixels of the map as size(P) = w*h, the multi-dimensional map layer data can be transformed into one-dimensional map layer data as follows.

$$P(x, y) \Rightarrow R(i)$$

Where, $i = x*w+y$, i denotes the smallest unit in the one-dimensional map layer data, and multiple smallest units i make up the one-dimensional map layer data.

At Step 203, the cleaning device may partition the one-dimensional first map layer data into a plurality of data block-sized blocks of first map data and the one-dimensional second map layer data into a plurality of data block-sized blocks of second map data.

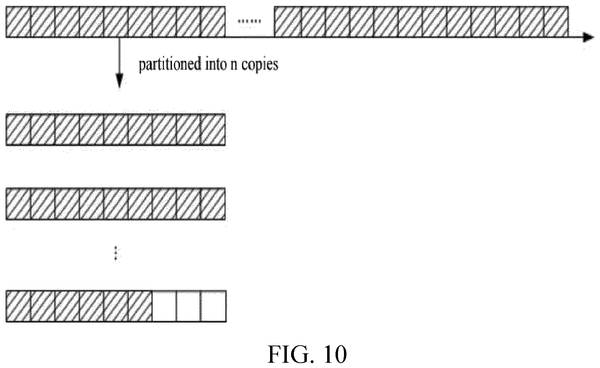

As shown in Fig. 10, the data block size can be predefined as N. The one-dimensional map layer data can be partitioned into n copies according to the following equation, and n can be calculated according to the following equation.

$$n = (size(P) + N) / N$$

Each map data block obtained by partitioning can be denoted as B(b, k), where b denotes the map data block number and k denotes the map data block size, to partition the one-dimensional map layer data into multiple map data blocks of data block size.

$$R(i) \Rightarrow B (b, k)$$

$$R(i) = B( i/N, i\%N)$$

The range of values of b: $0 \leq b < n$, and the range of values of k: $0 \leq k < (size(P) + N) \% N$.

The size of the map data block can be 8*8, 16*16, 32*32, 64*64 or other fixed sizes, depending on the maximum resolution of the map.

At Step 204, the cleaning device may obtain a first map data block that has changed relative to the second map data block of the same data block size.

The first map data block in the map layer data of the pixel layer that changes relative to the second map data block of the same map block size can be obtained, and this first map data block is used as the first map layer data of the pixel layer. The cleaning device may transmit only the block with data changes when the map is updated by performing a fixed size segmentation of the complete map data and segmenting it into fixed size blocks. As each block of map data becomes smaller, differential comparison of the changed data is performed for differential transmission, so that the map is transmitted in a similar incremental manner, and only the part of the updated map change is transmitted, thereby substantially reducing the transmission of map data.

In an example, the cleaning device may send the first map layer data that has changed to a different computing device (e.g., a cloud server). The sending step may comprise:

At Step 301, the cleaning device may obtain the first encoding method used in the last sending of the first map layer data.

The cleaning device may record the first encoding method used for the first map layer data each time the first map layer data is sent to the cloud, and the first encoding method may refer to the full data encoding method or the differential data encoding method.

If this is the first time the first map layer data is sent to the cloud, the full data encoding method can be determined as the first encoding method, and if this is not the first time the first map layer data is sent to the cloud, the first encoding method used in the last recorded sending of the first map layer data can be obtained.

At Step 302, the cleaning device may obtain a second encoding method different from the first encoding method.

A number of encoding methods for encoding the first map layer data can be set in advance, and when a second encoding method different from the first encoding method is needed, an encoding method other than the first encoding method is found among the number of encoding methods, and the found encoding method is determined as the second encoding method.

The full data encoding method (BP) and the differential data encoding method (DP) can be predefined, assuming that the first encoding method used last time is BP, then the second encoding method is DP, and if the first encoding method used last time is DP, then the second encoding method is BP, so that the BP+DP+BP+DP transmission mechanism may be implemented.

At Step 303, the cleaning device may encode the first map layer data obtained using the second encoding method.

Embodiments of the present application may encode the first map layer data in the following manner.

Data packing method may comprise: map data block number b + message type + full data/differential data.

The message type may be: divided into full/differential. The data content is encoded in a second encoding method for full or differential data, such as full data available in a segmented compression method.

At Step 304, the cleaning device may send the first map layer data encoded by the second encoding method to the cloud.

The embodiment of the present application is able to encode the first map layer data in a second encoding way, which is different from the first encoding way used for the last transmission of the first map layer data, and different encoding ways are used for two adjacent transmissions of the first map layer data, which can facilitate that the first map layer data sent in adjacent times can be referred to each other, and when the map data changes, only the corresponding map data block is updated and transmitted part, the unchanged map data block is not transmitted, and the two adjacent changes in the segmentation unit data change less, only the corresponding differential packet is transmitted, reducing one full transmission and reducing the flow of map data transmission.

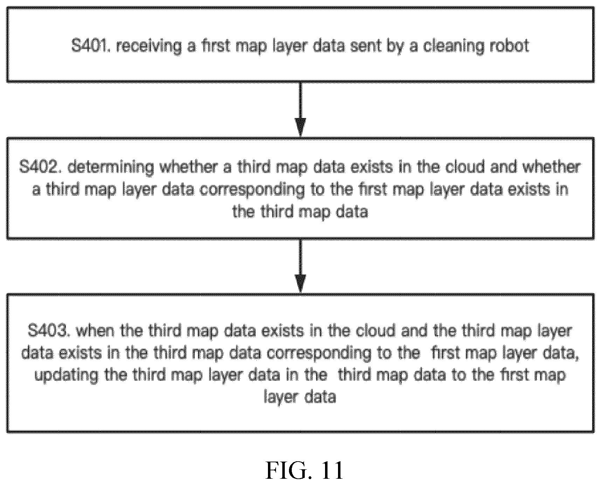

Another method of map data transmission associated with a computing device (e.g., a cloud server) is described in connection with Fig. 11. The method comprises:

At Step S401, the cleaning device may receive the first map layer data sent by the cleaning device.

The first map layer data is changed relative to the second map layer data of the same map layer, the first map layer data is obtained by map layer extraction of the first map data corresponding to the current cleaning position of said cleaning device, the second map layer data is obtained by map layer extraction of the second map data corresponding to the previous cleaning position of the cleaning device, the first map data and the second map data are both pre-divided into at least two map layers.

At Step S402, the cleaning device may determine whether the third map data exists in the cloud and whether the third map data corresponding to the first map layer data exists in the third map data.

The third map layer data may be the last map data received from the cleaning device, and the data content of the third map layer data may be the same as the second map layer data.

At Step S403, the cleaning device may update the third map layer data in the third map data to the first map layer data when the third map data exists in the cloud and the third map data exists in the third map data corresponding to the first map layer data.

The third map layer data in the third map data can be replaced using the first map layer data, i.e., the original third map layer data is deleted and the first map layer data is retained to realize the update of the map layer data.

By receiving the first map layer data sent by the cleaning device that changes relative to the second map layer data of the same map layer, the present invention describes using the first map layer data to update the third map layer data in the cloud to realize the stitching of map data as well as to save the complete map data in the cloud, which can reduce the size of the map data for transmission compared to the transmission of all map data. The bandwidth resources occupied by the map data are reduced, and the delay of map data transmission is avoided.

Determining whether third map data exists in the cloud and whether third map layer data corresponding to the first map layer data exists in the third map data may comprise:

At Step 501, a computing device (e.g., a cloud device) may extract a map identity and a map layer identity in the first map layer data.

The computing device may find the third map data corresponding to the map identification in the cloud.

At Step 502, the computing device may determine whether the third map data corresponding to the map identification exists in the cloud.

At Step 503, the computing device may determine whether third map layer data corresponding to the map identification exists in the third map data when the third map data corresponding to the map layer identification exists in the cloud.

At Step 504, the computing device may determine that third map data exists in the cloud and that third map layer data corresponding to the first map layer data exists in the third map data when the third map data exists corresponding to the map layer identification.

Since the first map layer data carries the map identification and the map layer identification, the present invention can determine the corresponding third map data in the cloud based on the map identification and the corresponding third map layer data in the third map data, which can facilitate the update of the map layer data.

Finding, among the third map data in the cloud, the third map layer data corresponding to the first map layer data, may further comprise:

At Step 601, the computing device may create a third map layer data corresponding to the first map layer data when the third map data exists in the cloud and the third map data does not exist in the third map data.

At Step 602, the computing device may update the third map layer data in the third map data to the first map layer data.

The present invention describes creating the third map layer data corresponding to the first map layer data when the third map layer data corresponding to the map layer identification does not exist in the cloud, so that the third map layer data corresponding to the first map layer data will exist in the cloud and the update of the map layer data can be easily realized.

Finding, among the third map data in the cloud, the third map layer data corresponding to the first map layer data, may comprise:

At Step 701, the computing device may create the third map data when the third map data does not exist in the cloud.

At Step 702, the computing device may create in the third map data a third map layer data corresponding to the first map layer data.

At Step 703, the computing device may update the third map layer data in the third map data to the first map layer data.

The present invention describes creating the third map data corresponding to the map logo and the third map layer data corresponding to the first map layer data when the third map data corresponding to the map logo does not exist in the cloud, so that the map data corresponding to the map logo and the third map layer data corresponding to the first map layer data will exist in the cloud, and the update of the map layer data can be easily realized.

In an embodiment of the present invention, updating the third map layer data in the third map data to said first map layer data when the third map data exists in the cloud and the third map data does not exist in the third map data corresponding to the first map layer data, or, when the third map data does not exist in the cloud, updating the third map layer data in the third map data to the first map layer data, may comprise:

At Step 801, the computing device may extract the data type, data offset position, data length, and/or data content in the first map layer data.

At Step 802, the computing device may add (e.g., insert) data content of the data length to the data offset location of the third map layer data when the data type is add/insert.

For example, adding means adding data content at the end of the third map layer data (i.e., at the data offset position), and inserting means inserting data content in the middle of the third map layer data according to the data cheap position.

Since the first map layer data carries the data type, the data offset position, the data length and the data content, and since the third map data exists in the cloud and the third map data corresponding to the first map layer data does not exist in the third map data, or, when the third map data does not exist in the cloud, when updating the third map layer data using the first map layer data, the third map layer data can be updated directly based on the first map layer data, the corresponding content in the created map layer data can be updated to realize the stitching of map data in the cloud, as well as to realize the saving of complete map data in the cloud, and the embodiment of the present invention, because only the first map layer data that has changed is transmitted, can make the transmission of map data less compared to the transmission of all map data, reduce the bandwidth resources occupied by the transmission of map data, and avoid map data transmission delay.

Updating the third map layer data in the third map data to the first map layer data when the third map data exists in said cloud and the third map data exists in the third map data corresponding to the first map layer data may comprise.

At Step 901, the computing device may extract the data type, data offset position, data length and data content in the first map layer data.

At Step 902, the computing device may delete at least some of the third map layer data when the data type is delete. The deleted third map layer data may be some of the data or all of the data.

For example, when the data type is inserted, shifting the data content at the data offset position by a distance of the data length to insert said data content at the data offset position in the third map layer data.

Inserting data content of the data length at the data offset location in the third map layer data when the data type is increase.

For example, deletion means deleting all data contents in the third map layer data, addition means adding data contents at the end of the third map layer data (equivalent to being at the data offset position), and insertion means inserting data contents in the middle of the third map layer data according to the data offset position.

Since the first map layer data carries data type, data offset position, data length and data content, and the original third map layer data exists in the cloud, when using the first map layer data to update the third map layer data, the corresponding content in the third map layer data in the cloud can be updated directly based on the first map layer data to realize the stitching of map data in the cloud, as well as to realize the preservation of complete map data in the cloud. The present invention, since only the first map layer data that has changed is transmitted, can reduce the size of the map data packets for transmission, reduce the bandwidth resources occupied by the transmission of map data, and avoid the transmission delay of map data, compared with the transmission of all map data.

In an example, updating the third map layer data in the third map data to the first map layer data, may comprise:

Step 1001, the computing device may obtain a first decoding method for decoding the last received first map layer data.

Step 1002, the computing device may obtain a second decoding method different from the first decoding method.

Step 1003, the computing device may decode the first map layer data using the second decoding method to obtain the decoded first map layer data.

Step 1004, the computing device may transform the decoded first map layer data to obtain first multidimensional map data.

Step 1005, the computing device may update the third map layer data using the first multi-dimensional map data.

The present application describes decoding the first map layer data in the second decoding mode, and this second decoding mode is different from the first decoding mode used for decoding the first map layer data last time, and different decoding modes are used for sending the first map layer data twice adjacent to each other, which can facilitate the first map layer data sent in adjacent times can be referred to each other. When the map data changes, only the corresponding map data blocks need to be updated and transmitted, the unchanged map data block is not transmitted, and the data changes of two adjacent change division units are small, only the corresponding differential packet is transmitted, reducing data transmission in full and reducing the flow of map data transmission.

A method of map data transmission applied to a user terminal (e.g., a user device, mobile phone) is provided as shown in Fig, 12. The method may comprise: At Step 1101, a user terminal may receive first map layer data sent by the cloud.

In an example, the first map layer data is sent by the cloud after updating the second map layer data to the first map layer data, the first map layer data is changed relative to the second map layer data of the same map layer, the first map layer data is obtained by map layer extraction of the first map data corresponding to the current cleaning position of the cleaning device, and the second map layer data is obtained by map layer extraction of the second map data corresponding to the previous cleaning position of the cleaning device. The first map data and the second map data may be pre-divided into at least two map layers.

At Step 1102, the user terminal may determine whether the user terminal has fourth map data and whether the fourth map data corresponding to the first map layer data is present in the fourth map data.

At Step 1103, the user terminal may update the fourth map layer data in the fourth map data to the first map layer data when the fourth map data exists in the user terminal and the fourth map data corresponds to the first map layer data.

At Step 1104, the user terminal may perform data rendering on the updated fourth map data.

By receiving the first map layer data sent from the cloud that changes relative to the second map layer data of the same map layer, the present application describes using the first map layer data to update the local fourth map layer data in the user terminal, realizing the stitching of map data in the user terminal, and realizing the rendering of complete map data in the user terminal, which can make the transmission of map data relative to the transmission of all map data. The amount of map data transmission can be reduced, the bandwidth resources occupied by the map data transmission can be reduced, and the delay of map data transmission can be avoided.

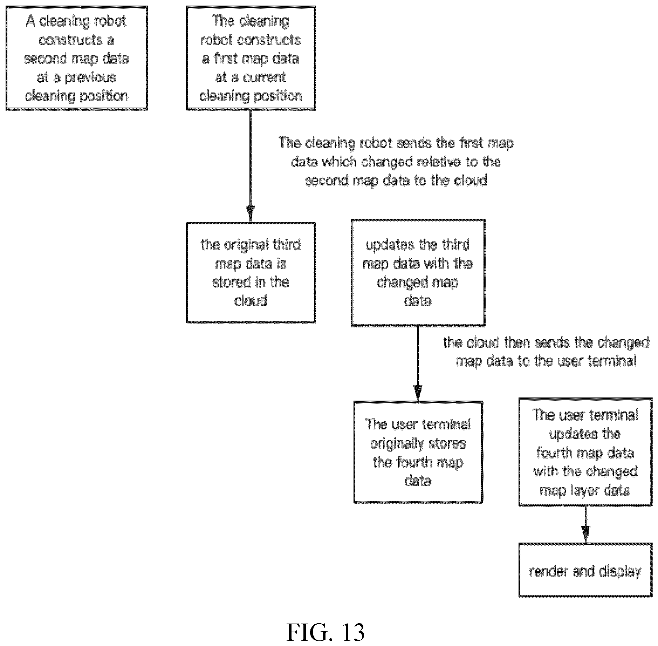

Fig. 13 illustrates a schematic diagram of a relationship between a first map, a second map, a third map, and a fourth map in a practical application. A cleaning device constructs a second map data at a previous cleaning position, constructs a first map data at a current cleaning position. When the first map data changes relative to the second map data, the cleaning device sends the first map data which changed relative to the second map data to the cloud, and the original third map data is stored in the cloud. When receiving the changed map data, the cloud updates the third map data with the changed map data, the cloud then sends the changed map data to the user terminal, which originally stores the fourth map data. When receiving the changed map layer data, the user terminal updates the fourth map data with the changed map layer data, and finally the user terminal can render and display the updated fourth map data.

The cleaning device may comprise at least one or more processors, one or more communication interfaces, one or more memory, and one or more communication buses. The processors, the communication interfaces, and the memory, may communicate with each other via the one or more communication buses. The one or more memory may be configured to storing computer programs and/or instructions for performing the methods described herein. The processors may be configured to perform the methods described herein.

The cleaning device described in the present invention can be a sweeping device, a mopping device, or an all-in-one sweeping and mopping device, without being uniquely limited herein. The processor obtains the first map data corresponding to the current cleaning position and the second map data corresponding to the previous cleaning position, wherein the first and second map data are pre-divided into at least two map layers, by first acquiring the first map data corresponding to the current cleaning position and the second map data corresponding to the previous cleaning position. Then the first map layer data of each map layer is extracted in the first map data, the second map layer data of each map layer is extracted in said second map data, then the first map layer data relative to said second map layer data of the same map layer is obtained which has changed, and finally said first map layer data which has changed can be sent to the cloud. Secondly, by sending to the cloud only the first map layer data that has changed relative to the second map layer data of the same map layer, the present application transfers less data, reduces the bandwidth resources occupied by the transmission of map data, and avoids the transmission delay of map data.

The embodiment of the present invention enables stitching of map data by receiving the first map layer data sent by the cleaning device that changes relative to the second map layer data of the same map layer, using the first map layer data to update the third map layer data in the cloud, as well as enabling saving the complete map data in the cloud, which, relative to transmitting all the map data, can make the transmission of map data less, reduce the bandwidth resources occupied by the transmission of map data and avoid the delay of map data transmission.

By receiving the first map layer data sent from the cloud that changes relative to the second map layer data of the same map layer, the embodiment of the present invention uses the first map layer data to update the fourth map layer data local to the user terminal, realizes the stitching of map data in the user terminal, and realizes the rendering of complete map data in the user terminal, which, relative to transmitting all map data, can make the transmission volume is reduced, the bandwidth resources occupied by the transmission of map data are reduced, and the transmission delay of map data is avoided.

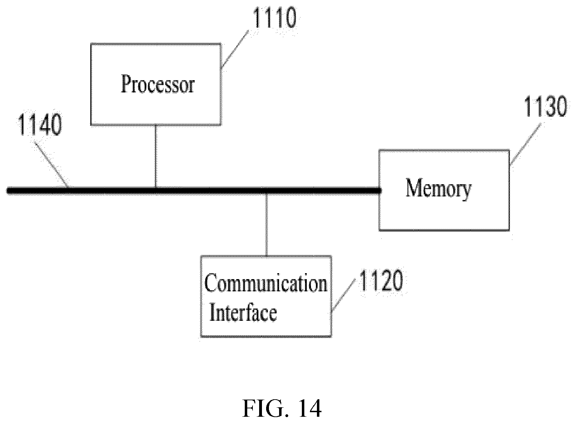

The communication bus 1140 mentioned above for cleaning devices can be a Peripheral Component Interconnect Standard (PCI) bus or an Extended Industry Standard Architecture (EISA) bus, for example. This communication bus 1140 can be divided into address bus, data bus, control bus, etc. For ease of representation, only one thick line is shown in Fig. 14, but it does not indicate that there is only one bus or one type of bus.

The communication interface 1120 is used for communication between the above cleaning device and other devices.

The memory 1130 may include Random Access Memory (RAM), or it may include non-volatile memory, such as at least one disk memory. The memory may also be at least one storage device located away from the aforementioned processor.

The above processor 1110 may be a general-purpose processor, including a Central Processing Unit (CPU), a Network Processor (NP), etc. It may also be a Digital Signal Processing (DSP), an Application Specific Integrated Circuit (ASIC), a Field-Programmable Gate Array (FPGA), or other programmable logic device, a discrete gate array (DGA), or a programmable logic device. Application Specific Integrated Circuit (ASIC), Field-Programmable Gate Array (FPGA), or other programmable logic devices, discrete gate or transistor logic devices, discrete hardware components.

A non-transitory computer readable storage medium is also provided, said computer readable storage medium having stored on it a program for a map data transfer method, said program for the map data transfer method when executed by a processor implementing the map data transfer method described in any of the method embodiments applied to a cleaning device, the map data transfer method described in any of the method embodiments applied to a cloud, or the steps of the map data transfer method described in the method embodiment applied to a user terminal.

It should be noted that the above embodiments illustrate the present application and do not limit it, and that a person skilled in the art may devise alternative embodiments without departing from the scope of the appended claims. Any reference symbols located between the brackets in the claim should not be constructed as a limitation of the claim. The word "comprising" does not exclude the presence of an element or step not listed in the claim. The word "one" or "one" before the component does not exclude the existence of multiple such components. This application can be implemented with the help of hardware including a number of different components and with the help of a computer appropriately programmed. In unit claims where several devices are listed, several of these devices may be specifically embodied by the same hardware item. The use of the words first, second, and third does not indicate any order. The words can be interpreted as names.

The above mentioned is only a specific implementation or a description of a specific implementation of this application. The scope of protection of this application is not limited to this, and any person skilled in the art can easily think of variations or substitutions within the technical scope disclosed in this application, which should be covered by the scope of protection of this application. The scope of protection of this application shall be subject to the scope of protection of the claims.

**Claims**

1. A method comprising:

    - obtaining, by a cleaning device, first map data through sensors of the cleaning device corresponding to a current cleaning position and second map data through sensors of the cleaning device corresponding to a previous cleaning position, each of the first and second map data comprises data associated with at least two map layers (0, 64, 100-105);
    - extracting, by the cleaning device, first map layer data from the first map data for each of the at least two map layers (0, 64, 100-105) and extracting, by the cleaning device, second map data from the second map data for each of the at least two map layers (0, 64, 100-105);
    - for at least one of the at least two map layers (0, 64, 100-105), obtaining, by the cleaning device, a difference between the first map layer data and the second map layer data, wherein the difference is a change of the second map layer data relative to the first map layer data; and
    - sending the difference to a computing device.

2. The method of claim 1, wherein the at least two map layers (0, 64, 100-105) comprise at least two of the following:

    - a parameter layer (0) comprising map parameters of a map,
    - a pixel layer (64) comprising pixel data for each pixel point in the map,
    - a cleaning device track layer (100) comprising track data for a cleaning track,
    - a cleaning device pose layer (104) comprising pose data for a cleaning pose,
    - a partitioned room layer (101) comprising partitioned room information for a partitioned room,
    - a restricted area layer (102) comprising cleaning restricted area information for a restricted area, or

    - a virtual wall layer (103) comprising one or more of virtual wall information of virtual walls in the map and room identification (105) of said partitioned room.

3. The method of claim 1, wherein the at least one of the at least two map layers (0, 64, 100-105) is a pixel layer comprising pixel data for each pixel point in a map, and the obtaining comprises:

    - obtaining a multi-dimensional first map layer data of the pixel layer from the first map data, and obtaining a multi-dimensional second map layer data of a same pixel layer from the second map data;
    - transforming the multi-dimensional first map layer data to obtain an one-dimensional first map layer data, and transforming the multi-dimensional second map layer data to obtain an one-dimensional second map layer data;
    - partitioning the one-dimensional first map layer data into a plurality of data blocks of the first map data, and partitioning the one-dimensional second map layer data into a plurality of data blocks of the second map data; and
    - obtaining a difference between one of the plurality data blocks of the first map data and a corresponding one of the plurality data blocks of the second map data.

4. The method of claim 1, wherein sending the comprises:

    - obtaining a first encoding method used in sending of previous map layer data;
    - encoding the difference using a second encoding method different from the first encoding method; and
    - sending the difference using the second encoding method.

5. The method of claim 1, wherein the first map layer data comprises at least one of:

    - a map identification,
    - a map layer identification,
    - a data type,
    - a data offset, or
    - a data length.

6. A method comprising:

    - receiving, by a computing device and from a cleaning device, a difference between first map layer data and second map layer data, wherein the first map layer data is extracted, by the cleaning device, from first map data that is obtained through sensors of the cleaning device and corresponds to a current cleaning position of the cleaning device, the second map layer data is extracted, by the cleaning device, from second map data that is obtained through sensors of the cleaning device and corresponds to a previous cleaning position of the cleaning device, and each of the first map data and the second map data comprises data associated with at least two map layers (0, 64, 100-105), wherein the difference is a change of the second map layer data relative to the first map layer data;

- determining whether third map layer data of stored third map data corresponds to the first map layer data; and
- based on the determining that the third map layer data of the stored third map data corresponds to the first map layer data, updating the third map layer data to be the first map layer data.

7. The method of claim 6, wherein the determining comprises:

    - extracting map identification and map layer identification in the first map layer data;
    - determining whether the third map data corresponding to the map identification is stored in the computing device;
    - based on the determining that the third map data corresponding to the map layer identification is stored in the computing device, determining whether the third map layer data corresponding to the map layer identification is in the third map data; and
    - based on the determining that the third map layer data corresponding to the map layer identification is in the third map data, determining that the third map layer data is stored in the computing device, and that the third map layer data corresponding to the first map layer data is in the third map data.

8. The method of claim 6, further comprising:

    - based on determining the third map layer data corresponding to the first map layer data is not in the third map data, creating the third map layer data corresponding to the first map layer data; and
    - updating the third map layer data to be the first map layer data.

9. The method of claim 6, further comprising:

    - creating the third map data when the third map data is not stored in the computing device;
    - creating the third map layer data corresponding to the first map layer data in the third map data;

and
- updating the third map layer data in the third map data as the first map layer data.

10. The method of claim 6, wherein the updating comprises:

    - extracting a data type, a data offset position, a data length, and data content in the first map layer data; and
    - based on the data type and the data offset position, adding data content of the data length of the first map layer data to the third map layer data.

11. The method of claim 6, wherein the updating comprises:

    - extracting a data type, a data offset position, a data length and data content in the first map layer data; and
    - based on determining that the data type is delete, deleting at least some of the third map layer data.

12. The method of claim 6, wherein the updating comprises:

    - obtaining a first decoding method for decoding previous first map layer data;
    - obtaining a second decoding method different from the first decoding method;
    - decoding the first map layer data using the second decoding method to obtain the decoded first map layer data;
    - transforming the decoded first map layer data to obtain first multi-dimensional map data; and
    - updating the third map layer data based on the first multi-dimensional map data.

13. A method comprising:

    - receiving, by a user device and from a computing device, first map layer data, wherein the first map layer data is updated based on second map layer, the first map layer data is extracted, by the cleaning device, from first map data obtained through sensors of the cleaning device and corresponding to a current cleaning position of a cleaning device, the second map layer data is extracted, by the cleaning device, from second map data obtained through sensors of the cleaning device and corresponding to a previous cleaning position of the cleaning device, each of the first map data and second map data comprises data associated with at least two map layers (0, 64, 100-105);
    - determining that fourth map data is stored in the user device and that fourth map layer data of the fourth map data corresponds to the first map layer data;
- updating the fourth map layer data in the fourth map data to the first map layer data; and
- outputting the updated fourth map data.

**Patentansprüche**

1. Verfahren, umfassend:

   - Erhalten, durch eine Reinigungsvorrichtung, von ersten Kartendaten über Sensoren der Reinigungsvorrichtung, die einer aktuellen Reinigungsposition entsprechen, und von zweiten Kartendaten über Sensoren der Reinigungsvorrichtung, die einer vorhergehenden Reinigungsposition entsprechen, wobei die ersten und zweiten Kartendaten jeweils Daten umfassen, die mindestens zwei Kartenebenen (0, 64, 100 bis 105) zugeordnet sind;
   - Extrahieren, durch die Reinigungsvorrichtung, von ersten Kartenebenendaten aus den ersten Kartendaten für jede der mindestens zwei Kartenebenen (0, 64, 100 bis 105) und Extrahieren, durch die Reinigungsvorrichtung, von zweiten Kartendaten aus den zweiten Kartendaten für jede der mindestens zwei Kartenebenen (0, 64, 100 bis 105);
   - für mindestens eine der mindestens zwei Kartenebenen (0, 64, 100 bis 105), Erhalten, durch die Reinigungsvorrichtung, einer Differenz zwischen den ersten Kartenebenendaten und den zweiten Kartenebenendaten, wobei die Differenz eine Änderung der zweiten Kartenebenendaten im Verhältnis zu den ersten Kartenebenendaten ist; und
   - Senden der Differenz an eine Rechenvorrichtung.

2. Verfahren nach Anspruch 1, wobei die mindestens zwei Kartenebenen (0, 64, 100 bis 105) mindestens zwei der Folgenden umfassen:

   - eine Parameterebene (0), die Kartenparameter einer Karte umfasst,
   - eine Pixelebene (64), die Pixeldaten für jeden Pixelpunkt auf der Karte umfasst,
   - eine Reinigungsvorrichtungsstreckenebene (100), die Streckendaten für eine Reinigungsstrecke umfasst,
   - eine Reinigungsvorrichtungsstellungsebene (104), die Stellungsdaten für eine Reinigungsstellung umfassen,
   - eine aufgeteilte Raumebene (101), die aufgeteilte Rauminformationen für einen aufgeteilten Raum umfasst,
   - eine Sperrbereichsebene (102), die Reinigungssperrbereichsinformationen für einen Sperrbereich umfasst, oder
   - eine virtuelle Wandebene (103), die eine oder mehrere von virtuellen Wandinformationen von virtuellen Wänden auf der Karte und einer Raumidentifizierung (105) des aufgeteilten Raums umfasst.

3. Verfahren nach Anspruch 1, wobei die mindestens eine der mindestens zwei Kartenebenen (0, 64, 100 bis 105) eine Pixelebene ist, die Pixeldaten für jeden Pixelpunkt auf einer Karte umfasst, und wobei das Erhalten umfasst:

   - Erhalten von multidimensionalen ersten Kartenebenendaten der Pixelebene aus den ersten Kartendaten, und Erzielen von multidimensionalen zweiten Kartenebenendaten derselben Pixelebene aus den zweiten Kartendaten;
   - Umwandeln der multidimensionalen ersten Kartenebenendaten, um eindimensionale erste Kartenebenendaten zu erhalten, und Umwandeln der multidimensionalen zweiten Kartenebenendaten, um eindimensionale zweite Kartenebenendaten zu erhalten;
   - Aufteilen der eindimensionalen ersten Kartenebenendaten in eine Vielzahl von Datenblöcken der ersten Kartendaten, und Aufteilen der eindimensionalen zweiten Kartenebenendaten in eine Vielzahl von Datenblöcken der zweiten Kartendaten; und
   - Erhalten einer Differenz zwischen einem von der Vielzahl von Datenblöcken der ersten Kartendaten und einem entsprechenden von der Vielzahl von Datenblöcken der zweiten Kartendaten.

4. Verfahren nach Anspruch 1, wobei das Senden umfasst:

   - Erhalten eines beim Senden von vorhergehenden Kartenebenendaten verwendeten ersten Codierungsverfahrens;
   - Codieren der Differenz unter Verwendung eines zweiten Codierungsverfahrens, das anders als das erste Codierungsverfahren ist; und
   - Senden der Differenz unter Verwendung des zweiten Codierungsverfahrens.

5. Verfahren nach Anspruch 1, wobei die ersten Kartenebenendaten mindestens eines umfassen von:

   - einer Kartenidentifizierung,
   - einer Kartenebenenidentifizierung,
   - einem Datentyp,
   - einem Datenversatz, oder
   - einer Datenlänge.

6. Verfahren, umfassend:

- Empfangen, durch eine Rechenvorrichtung und von einer Reinigungsvorrichtung, einer Differenz zwischen ersten Kartenebenendaten und zweiten Kartenebenendaten, wobei die erste Kartenebenendaten durch die Reinigungsvorrichtung aus ersten Kartdaten extrahiert werden, die über Sensoren der Reinigungsvorrichtung erhalten werden und einer aktuellen Reinigungsposition der Reinigungsvorrichtung entsprechen, die zweiten Kartenebenendaten durch die Reinigungsvorrichtung aus zweiten Kartdaten extrahiert werden, die über Sensoren der Reinigungsvorrichtung erhalten werden und einer vorhergehenden Reinigungsposition der Reinigungsvorrichtung entsprechen, und die ersten Kartdaten und die zweiten Kartdaten jeweils Daten umfassen, die mindestens zwei Kartenebenen (0, 64, 100 bis 105) zugeordnet sind, wobei die Differenz eine Änderung der zweiten Kartenebenendaten im Verhältnis zu den ersten Kartenebenendaten ist;
- Bestimmen, ob dritte Kartenebenendaten von gespeicherten dritten Kartdaten den ersten Kartenebenendaten entsprechen; und
- basierend auf dem Bestimmen, dass die dritten Kartenebenendaten der gespeicherten dritten Kartdaten den ersten Kartenebenendaten entsprechen, Aktualisieren der dritten Kartenebenendaten, die ersten Kartenebenendaten zu sein.

7. Verfahren nach Anspruch 6, wobei das Bestimmen umfasst:

- Extrahieren einer Kartenidentifizierung und einer Kartenebenenidentifizierung in den ersten Kartenebenendaten;
- Bestimmen, ob die dritten Kartdaten, die der Kartenidentifizierung entsprechen, in der Rechenvorrichtung gespeichert sind;
- basierend auf dem Bestimmen, dass die dritten Kartdaten, die der Kartenebenenidentifizierung entsprechen, in der Rechenvorrichtung gespeichert sind, Bestimmen, ob sich die dritten Kartenebenendaten, die der Kartenebenenidentifizierung entsprechen, in den dritten Kartdaten befinden; und
- basierend auf dem Bestimmen, dass sich die dritten Kartenebenendaten, die der Kartenebenenidentifizierung entsprechen, in den dritten Kartdaten befinden, Bestimmen, dass die dritten Kartenebenendaten in der Rechenvorrichtung gespeichert sind, und dass sich die dritten Kartenebenendaten, die den ersten Kartenebenendaten entsprechen, in den dritten Kartdaten befinden.

8. Verfahren nach Anspruch 6, ferner umfassend:

- basierend auf dem Bestimmen, dass sich die dritten Kartenebenendaten, die den ersten Kartenebenendaten entsprechen, nicht in den dritten Kartdaten befinden, Erstellen der dritten Kartenebenendaten, die den ersten Kartenebenendaten entsprechen; und
- Aktualisieren der dritten Kartenebenendaten, die ersten Kartenebenendaten zu sein.

9. Verfahren nach Anspruch 6, ferner umfassend:

- Erstellen der dritten Kartdaten, wenn die dritten Kartdaten nicht in der Rechenvorrichtung gespeichert sind;
- Erstellen der dritten Kartenebenendaten, die den ersten Kartenebenendaten entsprechen, in den dritten Kartdaten; und
- Aktualisieren der dritten Kartenebenendaten in den dritten Kartdaten als die ersten Kartenebenendaten.

10. Verfahren nach Anspruch 6, wobei das Aktualisieren umfasst:

- Extrahieren eines Datentyps, einer Datenversatzposition, einer Datenlänge und eines Dateninhalts in den ersten Kartenebenendaten; und
- basierend auf dem Datentyp und der Datenversatzposition, Hinzufügen eines Dateninhalts der Datenlänge der ersten Kartenebenendaten zu den dritten Kartenebenendaten.

11. Verfahren nach Anspruch 6, wobei das Aktualisieren umfasst:

- Extrahieren eines Datentyps, einer Datenversatzposition, einer Datenlänge und eines Dateninhalts in den ersten Kartenebenendaten; und
- basierend auf dem Bestimmen, dass der Datentyp Löschen ist, Löschen mindestens einiger der dritten Kartenebenendaten.

12. Verfahren nach Anspruch 6, wobei das Aktualisieren umfasst:

- Erhalten eines ersten Decodierungsverfahrens zum Decodieren vorhergehender erster Kartenebenendaten;
- Erhalten eines zweiten Decodierungsverfahrens, das anders als das erste Decodierungsverfahren ist;
- Decodieren der ersten Kartenebenendaten unter Verwendung des zweiten Decodierungsverfahrens, um die decodierten ersten Kartenebenendaten zu erhalten;
- Umwandeln der decodierten ersten Kartenebenendaten, um erste multidimensionale Kartendaten zu erhalten; und
- Aktualisieren der dritten Kartenebenendaten basierend auf den ersten multidimensionalen Kartendaten.

**13.** Verfahren, umfassend:

- Empfangen, durch ein Benutzergerät und von einer Rechenvorrichtung, von ersten Kartenebenendaten, wobei die ersten Kartenebenendaten basierend auf zweiter Kartenebene aktualisiert werden, die ersten Kartenebenendaten durch die Reinigungsvorrichtung aus ersten Kartendaten extrahiert werden, die über Sensoren der Reinigungsvorrichtung erhalten werden und einer aktuellen Reinigungsposition einer Reinigungsvorrichtung entsprechen, die zweiten Kartenebenendaten durch die Reinigungsvorrichtung aus den zweiten Kartendaten extrahiert werden, die über Sensoren der Reinigungsvorrichtung erhalten werden und einer vorhergehenden Reinigungsposition der Reinigungsvorrichtung entsprechen, und die ersten Kartendaten und die zweiten Kartendaten jeweils Daten umfassen, die mindestens zwei Kartenebenen (0, 64, 100 bis 105) zugeordnet sind;
- Bestimmen, dass vierte Kartendaten in dem Benutzergerät gespeichert sind, und dass vierte Kartenebenendaten der vierten Kartendaten den ersten Kartenebenendaten entsprechen;
- Aktualisieren der vierten Kartenebenendaten in den vierten Kartendaten zu den ersten Kartenebenendaten; und
- Ausgeben der aktualisierten vierten Kartendaten.

**Revendications**

**1.** Procédé comprenant :

- l'obtention, par un dispositif de nettoyage, de premières données de cartographie par l'intermédiaire de capteurs du dispositif de nettoyage correspondant à une position de nettoyage courante et de deuxièmes données de cartographie par l'intermédiaire de capteurs du dispositif de nettoyage correspondant à une position de nettoyage précédente, chacune des premières et deuxièmes données de cartographie comprend des données associées à au moins deux couches de cartographie (0, 64, 100-105) ;
- l'extraction, par le dispositif de nettoyage, de premières données de couche de cartographie à partir des premières données de cartographie pour chacune des au moins deux couches de cartographie (0, 64, 100-105) et l'extraction, par le dispositif de nettoyage, de deuxièmes données de couche de cartographie à partir des deuxièmes données de cartographie pour chacune des au moins deux couches de cartographie (0, 64, 100-105) ;
- pour au moins l'une des au moins deux couches de cartographie (0, 64, 100-105), l'obtention, par le dispositif de nettoyage, d'une différence entre les premières données de couche de cartographie et les deuxièmes données de couche de cartographie, dans lequel la différence est un changement des deuxièmes données de couche de cartographie par rapport aux premières données de couche de cartographie ; et
- l'envoi de la différence à un dispositif informatique.

**2.** Procédé selon la revendication 1, dans lequel les au moins deux couches de cartographie (0, 64, 100-105) comprennent au moins deux parmi ce qui suit :

- une couche de paramètres (0) comprenant des paramètres de cartographie d'une cartographie,
- une couche de pixels (64) comprenant des données de pixels pour chaque point de pixel dans la cartographie,
- une couche de suivi de dispositif de nettoyage (100) comprenant des données de suivi pour un suivi de nettoyage,
- une couche de pose de dispositif de nettoyage (104) comprenant des données de pose pour une pose de nettoyage,
- une couche de pièce partitionnée (101) comprenant des informations de pièce partitionnée pour une pièce partitionnée,
- une couche de zone interdite (102) comprenant des informations de zone interdite au nettoyage pour une zone interdite, ou
- une couche de paroi virtuelle (103) comprenant une ou plusieurs parmi des informations de paroi virtuelle de parois virtuelles dans la cartographie et une identification de pièce (105) de ladite pièce partitionnée.

**3.** Procédé selon la revendication 1, dans lequel l'au moins une parmi les au moins deux couches de cartographie (0, 64, 100-105) est une couche de pixels comprenant des données de pixels pour chaque point de pixel dans une cartographie, et l'obtention comprend :

- l'obtention de premières données de couche de cartographie multidimensionnelles de la couche de pixels à partir des premières données de cartographie, et l'obtention de deuxièmes données de couche de cartographie multidimensionnelles d'une même couche de pixels à partir des deuxièmes données de cartographie ;
- la transformation des premières données de couche de cartographie multidimensionnelles pour obtenir des premières données de couche de cartographie unidimensionnelles, et la transformation des deuxièmes données de couche de cartographie multidimensionnelles pour obtenir des deuxièmes données de couche de cartographie unidimensionnelles ;
- le partitionnement des premières données de couche de cartographie unidimensionnelles dans une pluralité de blocs de données des premières données de cartographie, et le partitionnement des deuxièmes données de couche de cartographie unidimensionnelles dans une pluralité de blocs de données des deuxièmes données de cartographie ; et
- l'obtention d'une différence entre l'un de la pluralité de blocs de données des premières données de cartographie et l'un correspondant de la pluralité de blocs de données des deuxièmes données de cartographie.

4. Procédé selon la revendication 1, dans lequel l'envoi comprend :

- l'obtention d'un premier procédé de codage utilisé dans l'envoi de données de couche de cartographie précédentes ;
- le codage de la différence en utilisant un deuxième procédé de codage différent du premier procédé de codage ; et
- l'envoi de la différence en utilisant le deuxième procédé de codage.

5. Procédé selon la revendication 1, dans lequel les premières données de couche de cartographie comprennent au moins l'un parmi :

- une identification de cartographie,
- une identification de couche de cartographie,
- un type de données,
- un décalage de données, ou
- une longueur de données.

6. Procédé comprenant :

- la réception, par un dispositif informatique et depuis un dispositif de nettoyage, d'une différence entre des premières données de couche de cartographie et des deuxièmes données de couche de cartographie, dans lequel les premières données de couche de cartographie sont extraites, par le dispositif de nettoyage, à partir de premières données de cartographie qui sont obtenues par l'intermédiaire de capteurs du dispositif de nettoyage et correspondent à une position de nettoyage courante du dispositif de nettoyage, les deuxièmes données de couche de cartographie sont extraites, par le dispositif de nettoyage, à partir de deuxièmes données de cartographie qui sont obtenues par l'intermédiaire de capteurs du dispositif de nettoyage et correspondent à une position de nettoyage précédente du dispositif de nettoyage, et chacune des premières données de cartographie et des deuxièmes données de cartographie comprend des données associées à au moins deux couches de cartographie (0, 64, 100-105), dans lequel la différence est un changement des deuxièmes données de couche de cartographie par rapport aux premières données de couche de cartographie ;
- la détermination si des troisièmes données de couche de cartographie de troisièmes données de cartographie stockées correspondent ou non aux premières données de couche de cartographie ; et
- sur la base de la détermination que les troisièmes données de couche de cartographie des troisièmes données de cartographie stockées correspondent aux premières données de couche de cartographie, la mise à jour des troisièmes données de couche de cartographie pour qu'elles soient les premières données de couche de cartographie.

7. Procédé selon la revendication 6, dans lequel la détermination comprend :

- l'extraction d'une identification de cartographie et d'une identification de couche de cartographie dans les premières données de couche de cartographie ;
- la détermination si les troisièmes données de cartographie correspondant à l'identification de cartographie sont ou non stockées dans le dispositif informatique ;
- sur la base de la détermination que les troisièmes données de cartographie correspondant à l'identification de couche de cartographie sont stockées dans le dispositif informatique, la détermination si les troisièmes données de couche de cartographie correspondant à l'identification de couche de cartographie sont ou non dans les troisièmes données de cartographie ; et
- sur la base de la détermination que les troisièmes données de couche de cartographie correspondant à l'identification de couche de cartographie sont dans les troisièmes données de cartographie, la détermination que les troisièmes données de couche de cartographie sont stockées dans le dispositif informatique, et que les troisièmes données de couche de cartographie correspondant aux premières données de couche de cartographie sont dans les troisièmes données de cartographie.

8. Procédé selon la revendication 6, comprenant en outre :

    - sur la base de la détermination que les troisièmes données de couche de cartographie correspondant aux premières données de couche de cartographie ne sont pas dans les troisièmes données de cartographie, la création des troisièmes données de couche de cartographie correspondant aux premières données de couche de cartographie ; et
    - la mise à jour des troisièmes données de couche de cartographie pour qu'elles soient les premières données de couche de cartographie.

9. Procédé selon la revendication 6, comprenant en outre :

    - la création des troisièmes données de cartographie lorsque les troisièmes données de cartographie ne sont pas stockées dans le dispositif informatique ;
    - la création des troisièmes données de couche de cartographie correspondant aux premières données de couche de cartographie dans les troisièmes données de cartographie ; et
    - la mise à jour des troisièmes données de couche de cartographie dans les troisièmes données de cartographie en tant que les premières données de couche de cartographie.

10. Procédé selon la revendication 6, dans lequel la mise à jour comprend :

    - l'extraction d'un type de données, d'une position de décalage de données, d'une longueur de données et d'un contenu de données dans les premières données de couche de cartographie ; et
    - sur la base du type de données et de la position de décalage de données, l'ajout d'un contenu de données de la longueur de données des premières données de couche de cartographie aux troisièmes données de couche de cartographie.

11. Procédé selon la revendication 6, dans lequel la mise à jour comprend :

    - l'extraction d'un type de données, d'une position de décalage de données, d'une longueur de données et d'un contenu de données dans les premières données de couche de cartographie ; et
    - sur la base de la détermination que le type de donnée est une suppression, la suppression d'au moins certaines des troisièmes données de couche de cartographie.

12. Procédé selon la revendication 6, dans lequel la mise à jour comprend :

    - l'obtention d'un premier procédé de décodage pour décoder des premières données de couche de cartographie précédentes ;
    - l'obtention d'un deuxième procédé de décodage différent du premier procédé de décodage ;
    - le décodage des premières données de couche de cartographie en utilisant le deuxième procédé de décodage pour obtenir les premières données de couche de cartographie décodées ;
    - la transformation des premières données de couche de cartographie décodées pour obtenir des premières données de cartographie multidimensionnelles ; et
    - la mise à jour des troisièmes données de couche de cartographie sur la base des premières données de cartographie multidimensionnelles.

13. Procédé comprenant :

    - la réception, par un dispositif utilisateur et depuis un dispositif informatique, de premières données de couche de cartographie, dans lequel les premières données de couche de cartographie sont mises à jour sur la base de deuxièmes données de couche de cartographie, les premières données de couche de cartographie sont extraites, par le dispositif de nettoyage, à partir de premières données de cartographie qui sont obtenues par l'intermédiaire de capteurs du dispositif de nettoyage et correspondent à une position de nettoyage courante d'un dispositif de nettoyage, les deuxièmes données de couche de cartographie sont extraites, par le dispositif de nettoyage, à partir de deuxièmes données de cartographie qui sont obtenues par l'intermédiaire de capteurs du dispositif de nettoyage et correspondent à une position de nettoyage précédente du dispositif de nettoyage, chacune des premières données de cartographie et des deuxièmes données de cartographie comprend des données associées à au moins deux couches de cartographie (0, 64, 100-105) ;
    - la détermination que des quatrièmes données de cartographie sont stockées dans le dispositif utilisateur et que des quatrièmes données de couche de cartographie des quatrièmes données de cartographie correspondent aux premières données de couche de cartographie ;
    - la mise à jour des quatrièmes données de couche de cartographie dans les quatrièmes données de cartographie aux premières données de couche de cartographie ; et
- la délivrance des quatrièmes données de cartographie mises à jour.

S101. Obtaining a first map data corresponding to a current cleaning position and a second map data corresponding to a previous cleaning position, the first and second map data are both pre-divided into at least two map layers

S102. Extracting first map layer data from the first map data for each map layer and extracting second map data from the second map data for each map layer

S103. Obtaining the first map layer data for which the second map layer data has changed relative to the same map layer

S104. Sending the changed first map layer data to the cloud

FIG. 1

FIG. 2

FIG. 3

FIG. 4

pose layer

FIG. 5

partitioned room
information

FIG. 6

forbidden area information

FIG. 7

FIG. 8

room identification

FIG. 9

partitioned into n copies

FIG. 10

S401. receiving a first map layer data sent by a cleaning robot

S402. determining whether a third map data exists in the cloud and whether a third map layer data corresponding to the first map layer data exists in the third map data

S403. when the third map data exists in the cloud and the third map layer data exists in the third map data corresponding to the  first map layer data, updating the third map layer data in the  third map data to the first map layer data

FIG. 11

S1101. receiving first map layer data sent from the cloud

S1102. determining whether a fourth map data exists in the user terminal and whether there is a fourth map layer data corresponding to the first map layer data in the fourth map data

S1103. updating the fourth map layer data in the fourth map data to the first map layer data when the fourth map data exists in the user terminal and the fourth map data corresponds to the first map layer data

S1104. rendering the updated fourth map data

FIG. 12

A cleaning robot constructs a second map data at a previous cleaning position

The cleaning robot constructs a first map data at a current cleaning position

The cleaning robot sends the first map data which changed relative to the second map data to the cloud

the original third map data is stored in the cloud

updates the third map data with the changed map data

the cloud then sends the changed map data to the user terminal

The user terminal originally stores the fourth map data

The user terminal updates the fourth map data with the changed map layer data

render and display

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016307328 A1
- US 2019368882 A1

- US 2019189006 A1